# EUROPEAN PATENT APPLICATION

(11) **EP 2 020 737 A2**
(43) Date of publication of application: **04.02.2009**
(21) Application number: 08252604.7
(22) Date of filing: 31.07.2008
(51) Int. Cl.: H02M 1/12, H02M 1/42

(54) **Power supply apparatus**

(30) Priority: 31.07.2007 JP 2007200242
(71) Applicant: Sanyo Electric Co., Ltd., Osaka 570-8677 (JP)
(72) Inventor: Fujii, Masaya, Moriguchi-City, Osaka 570-8677 (JP); Yoneda, Fumiiki, Moriguchi-City, Osaka 570-8677 (JP); Makino, Masahiro, Moriguchi-City, Osaka 570-8677 (JP)
(74) Representative: Calderbank, Thomas Roger

(57) **Abstract**

A power supply apparatus 1A comprises: a main circuit 2A and a control circuit 15A. The main circuit 2A comprises a diode rectifier circuit 14 configured to rectify alternating current voltages V1-V3 to thereby output a rectified voltage VPQ; and a boost circuit 13 configured to include a switching element Tr1, to boost the rectified voltage VPQ, and thereby to output the direct current voltage VO. Phase currents Iu1-Ius3 passing between a three-phase alternating current power supply 21 and the main circuit 2A increase in a period during which the switching element Tr1 is turned on. The control circuit 15A increases a ratio (i.e., a on-duty) of the on-period of the switching element Tr1 to the switching cycle in the periods corresponding to the falling portions P1 to P5 of the waveform of the rectified voltage VPQ.

## Description

This application is based upon and claims the benefit of priority from prior Japanese Patent Application No.2007-200242, filed on July 31, 2007; the entire contents of which are incorporated herein by reference.

The present invention relates to a power supply apparatus including a main circuit that supplies a direct current voltage to a load based on an input from a three-phase alternating current power supply, and a control circuit that detects the direct current voltage and controls the main circuit in accordance with the detected direct current voltage.

Conventionally, a configuration including a diode rectifier circuit and a boost circuit has been known as a main circuit to be used for a power supply apparatus as mentioned above. The diode rectifier circuit rectifies a phase voltage supplied by a three-phase alternating current power supply to thereby output a rectified voltage. The boost circuit includes a switching element connected to an output of the diode rectifier circuit, and boosts the rectified voltage to thereby output a direct current voltage.

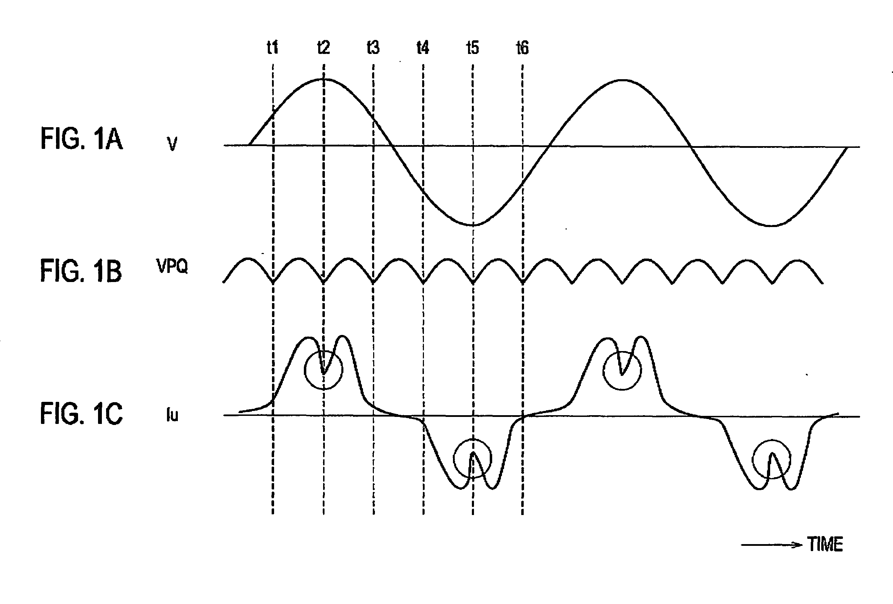

In such a power supply apparatus, a problem arises as given below, when a boost ratio (that is, a ratio of an output voltage to an input voltage of the main circuit) is small. Specifically, as shown in FIG. 1, a phase current Iu is largely distorted around positive and negative peak values of a phase voltage V (that is, in a period corresponding to a falling portion of an waveform of the rectified voltage VPQ).

Incidentally, three phase voltages and three phase currents, which differ in phase by 120° from each other, are actually present, although a single phase voltage V and a single phase current Iu are shown in FIG. 1.

The distortion of the phase current Iu as shown in FIG. 1 is caused mainly by an influence of a phase difference between line voltages in the three-phase alternating current power supply. Such distortion can lead to a phase current containing a large harmonic component, it may have a bad impact on a system power supply.

A power supply apparatus as given below has been proposed as a technology for correcting the distortion of the phase current when the boost ratio is small. (See Patent Document 1 (Japanese Patent Application Publication No. Hei 11-98847, page 5, Figure 2).) Specifically, the power supply apparatus disclosed in Patent Document 1 includes a resonance capacitor connected in parallel with a switching element, and a resonance reactor connected between a reverse blocking diode and a load.

In the above-mentioned power supply apparatus disclosed in Patent Document 1, the main circuit includes the resonance capacitor and the resonance reactor to thereby prevent the distortion of the phase current. However, for the foregoing resonance capacitor and resonance reactor, a capacitor and a reactor adaptable to large electric power are required respectively.

Therefore, the power supply apparatus disclosed in Patent Literature 1 has the problem of increasing the size and cost of the power supply apparatus.

An aspect of the present invention provides a power supply apparatus (power supply apparatuses 1A-1E). The power supply apparatus comprises: a main circuit (main circuits 2A, 2B) configured to receive an input of an alternating current voltage from a three-phase alternating current power supply (a three-phase alternating current power supply 21), to convert the alternating current voltage into a direct current voltage (a direct current voltage VO), and to apply the direct current voltage to a load (a load 22); and a control circuit (control circuits 15A-15E) configured to detect the direct current voltage and to control the main circuit in accordance with the detected direct current voltage. The main circuit is configured to comprise: a diode rectifier circuit (a diode rectifier circuit 14) configured to rectify the alternating current voltage (phase voltages V1-V3) to thereby output a rectified voltage (a rectified voltage VPQ); and a boost circuit (a boost circuit 13) configured to include a switching element (a switching element Tr1) connected to an output of the diode rectifier circuit, to boost the rectified voltage by getting the switching element to perform an on-off operation at a predetermined switching cycle, and thereby to output the direct current voltage. The control circuit is configured to increase a ratio of an on-period (e.g., on-periods T1-T3) of the switching element to the predetermined switching cycle in a period corresponding to a falling portion (falling portions P1-P4) of a waveform of the rectified voltage.

According to the aspect, the control circuit increases the ratio of the on-period of the switching element to the switching cycle in the periods corresponding to the falling portions of the waveform of the rectified voltage VPQ, and thereby increases phase currents. That is, the control circuit 15A can achieve a control for correcting distortions of the phase currents from outside the main circuit 2A. Thereby it is possible to suppress increases in the size and cost of the power supply apparatus 1A.

Consequently, it is possible to provide a power supply apparatus enabling to correct distortions of the phase currents, which is caused in the periods corresponding to the falling portions of the waveform of the rectified voltage, when the boost ratio is small. Incidentally, only the control circuit is required for changing the configuration, while the main circuit can maintain the existing configuration. Thereby a very high degree of general versatility is achieved.

In the above-described aspect of the present invention, the control circuit may be configured to extract a ripple component of the rectified voltage, and to increase the ratio of the on-period by using the extracted ripple component.

According to the aspect, the control circuit can accurately detect the periods in which the phase currents are distorted. Thereby, it is possible to increase the ratio of the on-period at appropriate timings.

In the above-described aspect of the present invention, the control circuit may be configured to comprise: an error amplifier (an error amplifier 155) configured to output an error signal (an error signal ES) depending on a difference between the direct current voltage and a target value of the direct current voltage; a filter circuit (a filter circuit 151) configured to extract the ripple component; a phase inverter circuit (a phase inverter circuit 152) configured to invert a phase of the ripple component; a superimposing circuit (an adder 156A, a multiplier 156B) configured to superimpose an output signal (correction signals CS1, CS2) from the phase inverter circuit on the error signal outputted by the error amplifier; and a switching control circuit (switching control circuits 150A, 150B) configured to control the on-off operation of the switching element in accordance with an output signal (an output signal S2) from the superimposing circuit.

According to the aspect, the feedback configuration for keeping the direct current voltage constant is used thereby to achieve the control for correcting the distortion of the phase currents. In other words, the control circuit is not required for substantially changing the configuration. Thereby it is possible to easily correct the distortion of the phase currents.

In the above-described aspect of the present invention, the control circuit may be configured to comprise: an error amplifier (an error amplifier 155) configured to output an error signal (an error signal ES) depending on a difference between the direct current voltage and a target value of the direct current voltage; a filter circuit (a filter circuit 151) configured to extract the ripple component; a subtracter (a subtracter 156C) configured to subtract an output signal (a correction signal CS5) from the filter circuit, from the error signal outputted by the error amplifier; and a switching control circuit (a switching control circuit 150A) configured to control the on-off operation of the switching element in accordance with an output signal from the subtracter.

According to the aspect, the feedback configuration for keeping the direct current voltage constant is used thereby to achieve the control for correcting the distortion of the phase currents. In other words, the control circuit is not required for substantially changing the configuration. Thereby it is possible to easily correct the distortion of the phase currents.

In the above-described aspect of the present invention, the control circuit may be configured to generate a correction signal (correction signal CS3) whose frequency component is six times higher than a frequency component of the alternating current voltage, in synchronization with the alternating current voltage, and to increase the ratio of the on-period by using the generated correction signal.

According to the aspect, the control circuit can accurately detect the periods in which the phase currents are distorted. Thereby, it is possible to increase the ratio of the on-period at appropriate timings.

In the above-described aspect of the present invention, the control circuit may be configured to comprise: an error amplifier (an error amplifier 155) configured to output an error signal (an error signal ES) depending on a difference between the direct current voltage and a target value of the direct current voltage; a synchronization signal generator circuit (synchronization signal generator circuit 201) configured to detect a timing (a zero crossing) at which the alternating current voltage becomes zero, and to generate a synchronization signal (a synchronization signal SYN) in synchronization with the detected timing; a correction signal generator circuit (correction signal generator circuits 202A, 202B) configured to generate the correction signal, by using the synchronization signal as a reference; a superimposing circuit (an adder 156A, a multiplier 156B) configured to superimpose the correction signal on the error signal outputted by the error amplifier; and a switching control circuit (switching control circuits 150A, 150B) configured to control the on-off operation of the switching element in accordance with an output signal (an output signal S2) from the superimposing circuit.

According to the aspect, the feedback configuration for keeping the direct current voltage constant is used thereby to achieve the control for correcting the distortion of the phase currents. In other words, the control circuit is not required for substantially changing the configuration. Thereby it is possible to easily correct the distortion of the phase currents.

In the drawings
FIGs. 1A to 1C is a waveform chart for explaining the background art of the present invention.
FIG. 2 is a circuit block diagram of a power supply apparatus according to a first embodiment of the present invention.
FIGs. 3A to 3C are waveform charts for explaining an operation of a control circuit according to the first embodiment of the present invention.
FIG. 4 is a waveform chart of a phase current in a comparative example of the first embodiment of the present invention.
FIG. 5 is a waveform chart of a phase current in the power supply apparatus according to the first embodiment of the present invention.
FIG. 6 is a circuit block diagram of a power supply apparatus according to a modified example of the first embodiment of the present invention.
FIG. 7 is a circuit block diagram of a power supply apparatus according to a second embodiment of the present invention.
FIGs. 8A and 8B are waveform charts for explaining an operation of the power supply apparatus according to the second embodiment of the present invention.
FIG. 9 is a circuit block diagram of a power supply apparatus according to a modified example of the second embodiment of the present invention.
FIG. 10 is a circuit block diagram of a power supply apparatus according to another embodiment.

### (First Embodiment)

Description will now be given of a power supply apparatus according to the first embodiment with reference to the drawings. Specifically, description will be given of (1) a configuration of the power supply apparatus, (2) an operation of the power supply apparatus, (3) a comparative example, (4) functions and advantageous effects, and (5) a modified example.

Incidentally, in the descriptions of the drawings for respective embodiments given below, identical or similar reference numerals are given to identical or similar parts.

### (1) The configuration of the power supply apparatus

Firstly, description will be given of the configuration of the power supply apparatus according to the fist embodiment, in the following order: an overall general configuration, a configuration of a main circuit, and a configuration of a control circuit.

### (1.1) The overall general configuration

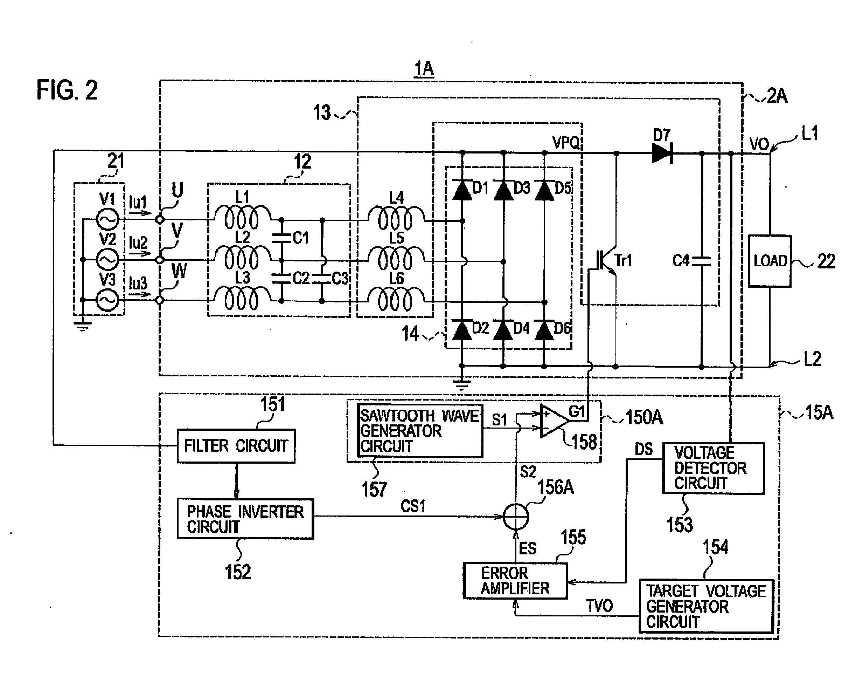

FIG. 2 is a circuit block diagram of a power supply apparatus 1A according to the first embodiment. As shown in FIG. 2, the power supply apparatus 1A includes a main circuit 2A and a control circuit 15A. The main circuit 2A is connected to a three-phase alternating current power supply 21 and a load 22. The control circuit 15A is connected to the main circuit 2A.

The three-phase alternating current power supply 21 applies phase voltages V1, V2 and V3, which differ in phase by 120° from each other, to three-phase alternating current power supply terminals U, V and W, respectively. In the first embodiment, an input voltage (or a line voltage) to the main circuit 2A is 400 V.

The main circuit 2A supplies a direct current voltage VO to the load 22, by using an input from the three-phase alternating current power supply 21. In the first embodiment, the direct current voltage VO outputted by the main circuit 2A is 650 V In other words, in the main circuit 2A, the input voltage (or the line voltage) is 400 V while the output voltage (or the direct current voltage VO) is 650 V. Consequently, a boost ratio is small.

The control circuit 15A detects the direct current voltage VO and controls the main circuit 2A in accordance with the detected direct current voltage VO. Specifically, the control circuit 15A controls the main circuit 2A so that the direct current voltage VO reaches a predetermined target value.

### (1.2) The configuration of the main circuit

Description will now be given of the configuration of the main circuit 2A. The main circuit 2A includes a low-pass filter 12, a boost circuit 13 and a diode rectifier circuit 14.

The low-pass filter 12 includes reactors L1 to L3 and capacitors C1 to C3. One ends of the reactors L1, L2 and L3 are respectively connected to the three-phase alternating current power supply terminals U, V and W. The capacitors C1, C2 and C3 are respectively connected to the other ends of reactors L1, L2 and L3.

The boost circuit 13 includes alternating current reactors L4 to L6, a switching element Tr1, a reverse blocking diode D7, and a smoothing capacitor C4. One ends of the alternating current reactors L4, L5 and L6 are respectively connected to the other ends of reactors L1, L2 and L3.

The switching element Tr1 is connected between power supply lines L1 and L2. In the first embodiment, an insulated gate bipolar transistor (IGBT) is used as the switching element Tr1. The smoothing capacitor C4 is connected in parallel with the load 22. Incidentally, the switching element Tr1 is brought into conduction when turned on, while the switching element Tr1 is brought out of conduction when turned off.

The boost circuit 13 gets the switching element Tr1 into an on-off operation at a predetermined switching cycle. Here, the on-off operation refers to an operation in which the switching element Tr1 alternates between "on" and "off". Incidentally, the on-off operation of the switching element Tr1 is controlled by the control circuit 15A.

The reverse blocking diode D7 is connected on the power supply line L1 between the switching element Tr1 and the smoothing capacitor C4.

The diode rectifier circuit 14 includes diodes D1 to D6. The diodes D1 and D2 are connected between the power supply lines L1 and L2. The other end of the alternating current reactor L4 is connected between the diodes D1 and D2.

Likewise, the diodes D3 and D4 are connected between the power supply lines L1 and L2. The other end of the alternating current reactor L5 is connected between the diodes D3 and D4.

Also, the diodes D5 and D6 are connected between the power supply lines L1 and L2. The other end of the alternating current reactor L6 is connected between the diodes D5 and D6.

The diode rectifier circuit 14 rectifies the phase voltages V1 to V3 supplied from the three-phase alternating current power supply 21 to thereby output a rectified voltage VPQ. The boost circuit 13 boosts the rectified voltage VPQ to thereby output the direct current voltage VO.

### (1.3) The configuration of the control circuit

Description will now be given of the configuration of the control circuit 15A. The control circuit 15A includes a filter circuit 151, a phase inverter circuit 152, a voltage detector circuit 153, a target voltage generator circuit 154, an error amplifier 155, an adder 156A and a switching control circuit 150A.

The filter circuit 151 is connected to an output of the diode rectifier circuit 14. The filter circuit 151 is a band-pass filter. The filter circuit 151 eliminates a noise contained in the rectified voltage VPQ from the diode rectifier circuit 14 and extracts a ripple component.

The phase inverter circuit 152 is connected to an output of the filter circuit 151. The phase inverter circuit 152 inverts a phase of the ripple component extracted by the filter circuit 151.

The voltage detector circuit 153 is connected to the power supply line L1. The voltage detector circuit 153 detects the direct current voltage VO and inputs a detection signal DS to the error amplifier 155. Specifically, the voltage detector circuit 153 performs a resistance voltage division to the direct current voltage VO to thereby generates the detection signal DS.

The target voltage generator circuit 154 generates a target voltage TVO, which is a target value of the detection signal DS.

The error amplifier 155 is connected to the voltage detector circuit 153 and the target voltage generator circuit 154. The error amplifier 155 outputs an error signal ES depending on a difference between the detection signal DS and the target voltage TVO.

The adder 156A is connected to the phase inverter circuit 152 and the error amplifier 155. The adder 156A adds an output signal CS1 from the phase inverter circuit 152 and the error signal ES.

The switching control circuit 150A controls the on-off operation of the switching element Tr1 in accordance with an output signal S2 from the adder 156A. Specifically, the switching control circuit 150A includes a sawtooth wave generator circuit 157 and a comparator 158.

The sawtooth wave generator circuit 157 generates a sawtooth wave (or a triangular wave) S1 of which a frequency is higher than each of frequencies of the phase voltages V1 to V3. Also, the sawtooth wave S1 generated by the sawtooth wave generator circuit 157 determines a switching frequency of the switching element Tr1.

The comparator 158 outputs a switching control signal (a PWM signal) G1 in accordance with a result of the comparison between the sawtooth wave S1 and the output signal S2 from the adder 156A. The switching control signal G1 is inputted to a gate of the switching element Tr1.

Specifically, in a period during which the output signal S2 is larger than the sawtooth wave S1, the switching control signal G1 of H level is outputted to turn on the switching element Tr1. On the other hand, in a period during which the output signal S2 is smaller than the sawtooth wave S1, the switching control signal G1 of L level is outputted to turn off the switching element Tr1.

Such a feedback configuration enables to change an on-duty of the switching element Tr1 and thereby to control so that the direct current voltage VO is kept constant.

### (2) The operation of the power supply apparatus

Description will now be given of the operation of the power supply apparatus 1A in the following order: an operation of the main circuit 2A, and an operation of the control circuit 15A.

### (2.1) The operation of the main circuit

The switching element Tr1 is turned on in a period during which the switching control signal G1 is at H level. When the switching element Tr1 is turned on, the three-phase alternating current power supply 21 is shorted through the alternating current reactors L4 to L6.

Consequently, currents passing through the alternating current reactors L4 to L6, namely, phase currents Iu1 to Iu3 increases respectively. Further, when the switching element Tr1 is turned on, energies proportional to the phase voltages V1 to V3 are respectively stored in the alternating current reactors L4 to L6.

The switching element Tr1 is turned off in a period during which the switching control signal G1 is at L level. When the switching element Tr1 is turned off, the energies stored in the alternating current reactors L4 to L6 are transferred to the smoothing capacitor C4 through the diode rectifier circuit 14 and the reverse blocking diode D7. Thereby, the smoothing capacitor C4 is charged.

Thus a charging period of the smoothing capacitor C4 is controlled by the on-off operation of the switching element Tr1. Thereby, the voltage of the smoothing capacitor C4, that is, the direct current voltage VO is also controlled by the switching element Tr1.

Incidentally, the low-pass filter 12 eliminates a high-frequency component involved in the on-off operation of the switching element Tr1.

### (2.2) The operation of the control circuit

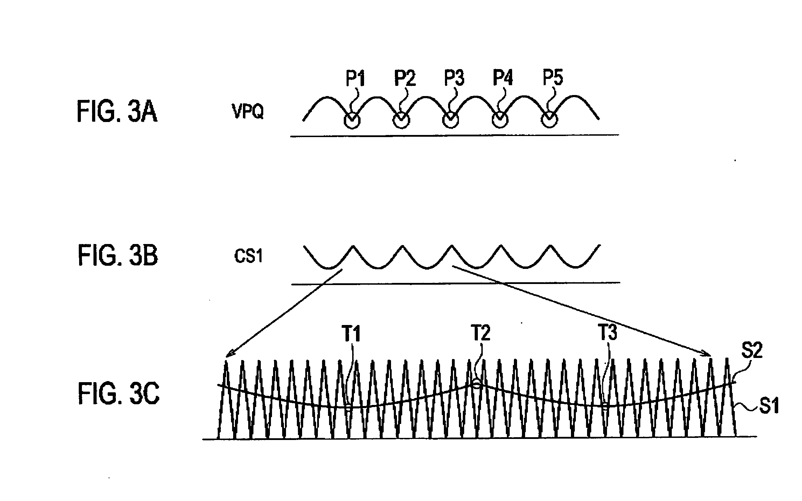

FIGs. 3A to 3C are waveform charts for explaining the operation of the control circuit 15A.

The filter circuit 151 receives an input of the rectified voltage VPQ shown in FIG. 3A. Incidentally, a noise is actually contained in the rectified voltage VPQ shown in FIG. 3A. Further, a distortion occurs in the phase currents Iu1 to Iu3 in periods corresponding to falling portions P1 to P5 of the rectified voltage VPQ (see FIG. 1).

The filter circuit 151 extracts the ripple component (i.e., an AC component) from the rectified voltage VPQ. The phase inverter circuit 152 inverts the ripple component of the rectified voltage VPQ, as shown in FIG. 3B. The output signal from the phase inverter circuit 152 is inputted as a correction signal CS1 to the adder 156A.

Consequently, the output signal S2 from the adder 156A has a waveform in which the correction signal CS1 is superimposed on the error signal ES from the error amplifier 155, as shown in FIG. 3C. In other words, the error signal ES from the error amplifier 155 is modulated with the correction signal CS1.

The output signal S2 from the adder 156A is compared to the sawtooth wave S1 by the comparator 158. The comparator 158 outputs the switching control signal G1 of H level, when the output signal S2 from the adder 156A is larger than the sawtooth wave S1.

Thus, the on-duty of the switching element Tr1 becomes larger in a period T2 than in periods T1 and T3, as shown in FIG. 3C. In other words, the on-duty of the switching element Tr1 becomes larger in periods corresponding to the falling portions P1 to P5 of the rectified voltage VPQ.

As the on-duty of the switching element Tr1 becomes larger, the currents passing through the alternating current reactors L4 to L6, that is, the phase currents Iu1 to Iu3 increase. Consequently, it is possible to increase the phase currents Iu1 to Iu3 in the periods corresponding to the falling portions P1 to P5 of the rectified voltage VPQ, as compared to other periods.

### (3) The comparative example

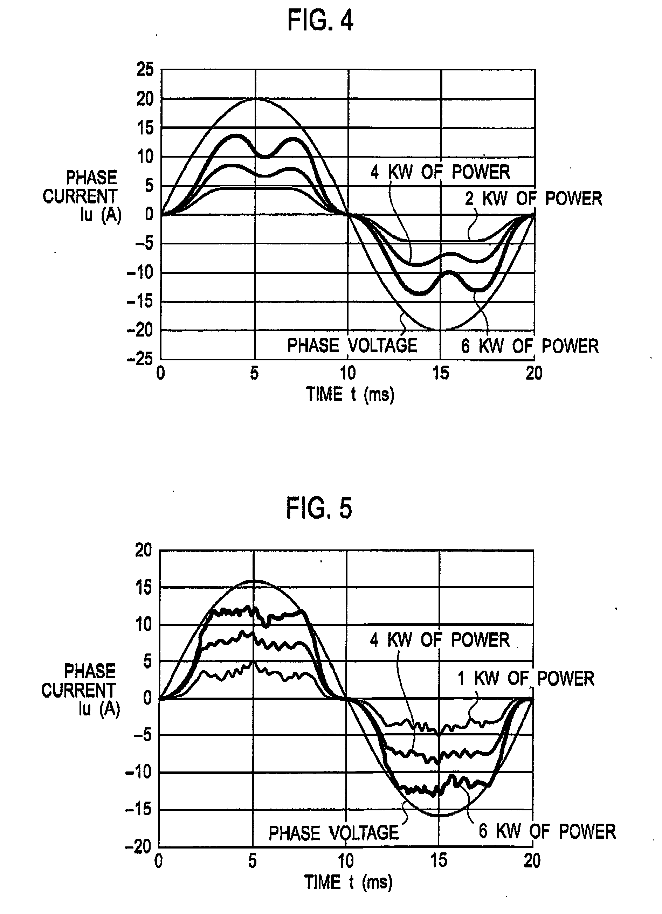

Description will now be given referring to the comparative example for clarifying advantageous effects achieved by the first embodiment. FIG. 4 is a waveform chart showing the comparative example of the first embodiment.

FIG. 4 shows a waveform of the phase current Iu when the filter circuit 151, the phase inverter circuit 152 and the adder 156A shown in FIG. 2 are not provided.

In the comparative example, the phase current Iu is largely distorted around positive and negative peak values of a phase voltage. Such distortion can lead to the phase current Iu containing a large harmonic component, it may have a bad impact on a system power supply.

On the other hand, FIG. 5 is a waveform chart of the phase current Iu when the filter circuit 151, the phase inverter circuit 152 and the adder 156A shown in FIG. 2 are provided (that is, the power supply apparatus 1A according to the first embodiment).

In the first embodiment, as shown in FIG. 5, the phase current Iu is not largely distorted even around the positive and negative peak values of the phase voltage. Consequently a large harmonic component contained in the phase current Iu is spread, and thereby it is unlikely to have the bad impact on the system power supply.

### (4) The functions and advantageous effects

As described above, the phase currents Iu1 to Iu3 passing between the three-phase alternating current power supply 21 and the main circuit 2A increase in a period during which the switching element Tr1 is turned on. The control circuit 15A increases the ratio (i.e., the on-duty) of the on-period of the switching element Tr1 to the switching cycle in the periods corresponding to the falling portions P1 to P5 of the waveform of the rectified voltage VPQ, as compared to other periods.

Therefore, the control circuit 15A can achieve a control for correcting distortions of the phase currents Iu1 to Iu3 from outside the main circuit 2A. Thereby it is possible to suppress increases in the size and cost of the power supply apparatus 1A. Incidentally, only the control circuit 15A is required for changing the configuration, while the main circuit 2A can maintain the existing configuration. Thereby a very high degree of general versatility is achieved.

According to the first embodiment, moreover, the control circuit 15A extracts the ripple component of the rectified voltage VPQ, and increases the on-duty of the switching element Tr1 by using the extracted ripple component Tr1.

Therefore, the control circuit 15A can accurately detect the periods in which the phase currents Iu1 to Iu3 are distorted. Thereby, it is possible to increase the on-duty of the switching element Tr1 at appropriate timings.

According to the first embodiment, further, the feedback configuration for keeping the direct current voltage VO constant is used thereby to achieve the control for correcting the distortion of the phase currents Iu1 to Iu3. In other words, the control circuit 15A is not required for substantially changing the configuration. Thereby it is possible to easily correct the distortion of the phase currents Iu1 to Iu3.

### (5) The modified example

Description will be given of the configuration of the power supply apparatus 1A having a current critical mode function added thereto, as the modified example of the power supply apparatus 1A mentioned above. A current critical mode is a form of current discontinuous mode, and the current critical mode function is to permit the on-off operation of the switching element Tr1 after the currents passing through the alternating current reactors L4 to L6 have become zero (or nearly zero). Incidentally, the current discontinuous mode is a state (i.e., mode) in which reactor currents (i.e., switching currents) decreases to 0 A within a single switching cycle of the switching element Tr1.

The slopes of the trailing edges of the currents through the alternating current reactors L4 to L6 when the switching element Tr1 is turned off are determined by the value of the direct current voltage VO to the instantaneous values of the phase voltages V1 to V3. Consequently, the slopes are gradual when the direct current voltage VO is low. It causes the currents through the alternating current reactors L4 to L6 not to reach zero within the switching cycle.

Energy produced by the currents that fail to drop to zero is stored in the alternating current reactors L4 to L6 every time the on-off operation of the switching element Tr1 takes place. Consequently, the mean value of the currents passing through the alternating current reactors L4 to L6 is not proportional to the instantaneous values of the phase voltages V1 to V3. It causes the distortion of the waveforms of the phase currents Iu1 to Iu3.

### (5.1) The configuration and operation of the power supply apparatus

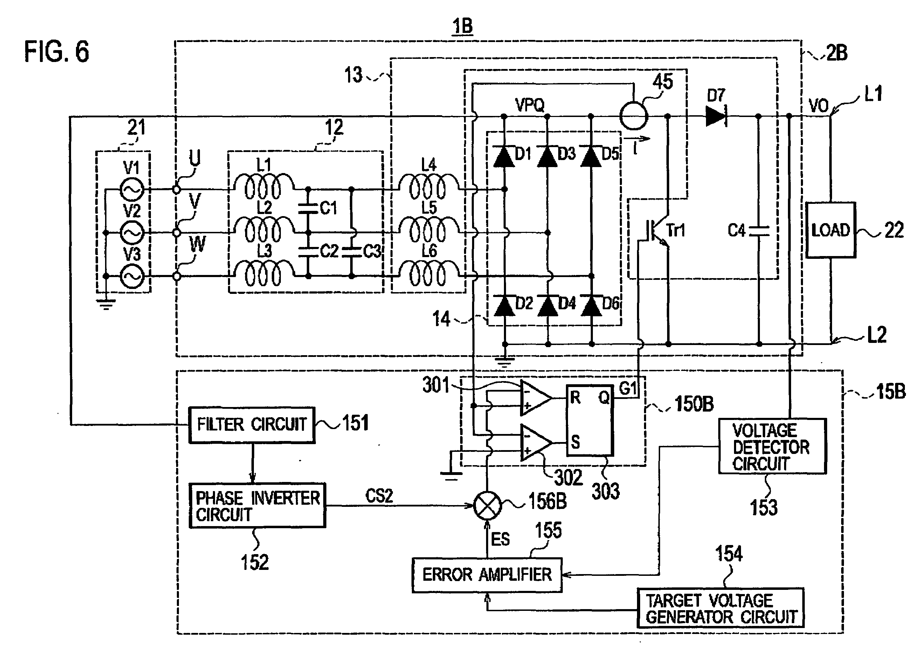

FIG. 6 is a circuit block diagram showing the configuration of a power supply apparatus 1B according to the modified example. The power supply apparatus 1B is different from the power supply apparatus 1A shown in FIG. 2 in that a main circuit 2B includes a current detector circuit 45 provided on the power supply line L1.

The current detector circuit 45 is connected on the power supply line L1 between the diode rectifier circuit 14 and the reverse blocking diode D7. The current detector circuit 45 detects a current I passing through the output of the diode rectifier circuit 14.

The power supply apparatus 1B includes a control circuit 15B having a multiplier 156B in place of the adder 156A. The multiplier 156B multiplies the output signal ES from the error amplifier 155 by the output signal (a correction signal CS2) from the phase inverter circuit 152.

A switching control circuit 150B performs control so as to permit the on-off operation of the switching element Tr1 after the current I passing through the output of the diode rectifier circuit 14 has become zero. Specifically, the switching control circuit 150B includes comparators 301 and 302, as well as an RS flip-flop (RS-FF) 303.

The comparator 301 receives an output signal from the multiplier 156B and a current detection signal from the current detector circuit 45 as inputs. The comparator 302 receives the current detection signal from the current detector circuit 45 as one input. The other input of the comparator 302 is grounded. The RS-FF 303 outputs the switching control signal G1 in accordance with output signals from the comparators 801 and 302.

### (5.2) The functions and advantageous effects

According to the modified example, the switching element Tr1 is allowed to perform the on-off operation after the current passing through the output of the diode rectifier circuit 14 (that is, the currents through the alternating current reactors L4 to L6) has become zero. Thereby it is possible to further improve the waveforms of the phase currents Iu1 to Iu3.

### (Second Embodiment)

Description will now be given of the second embodiment of the present invention in the following order: (1) a configuration of the power supply apparatus, (2) an operation of the power supply apparatus, (3) functions and advantageous effects, and (4) a modified example. Incidentally, description will be given for the second embodiment mainly with regard to the points of difference between this embodiment and the above-mentioned first embodiment.

### (1) The configuration of the power supply apparatus

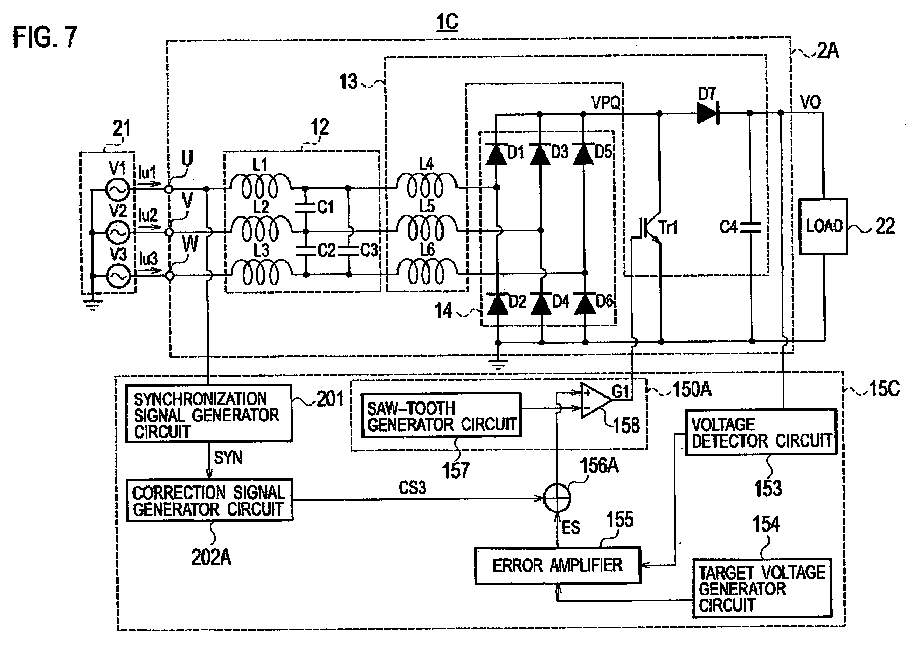

FIG. 7 is a circuit block diagram showing the configuration of a power supply apparatus 1C according to the second embodiment. As shown in FIG. 7, a control circuit 15C is different from the above-mentioned first embodiment in that the control circuit 15C includes a synchronization signal generator circuit 201 and a correction signal generator circuit 202A.

The synchronization signal generator circuit 201 is connected to the alternating current power supply terminal U. Incidentally, the synchronization signal generator circuit 201 may be connected at its input to any one of the alternating current power supply terminals V and W instead of the alternating current power supply terminal U.

The synchronization signal generator circuit 201 detects a timing at which the phase voltage V1 becomes zero, and generates a synchronization signal SYN in synchronization with the detected timing.

The correction signal generator circuit 202A is connected to an output of the synchronization signal generator circuit 201. An output of the correction signal generator circuit 202A is connected to an input of the adder 156A. Incidentally, the correction signal generator circuit 202A is configurable with a microcomputer.

The correction signal generator circuit 202A generates a correction signal CS3 whose frequency component is six times higher than a frequency component of the phase voltage V1, by using the synchronization signal SYN as a reference. Other configurations are the same as those of the above-mentioned first embodiment.

### (2) The operation of the power supply apparatus

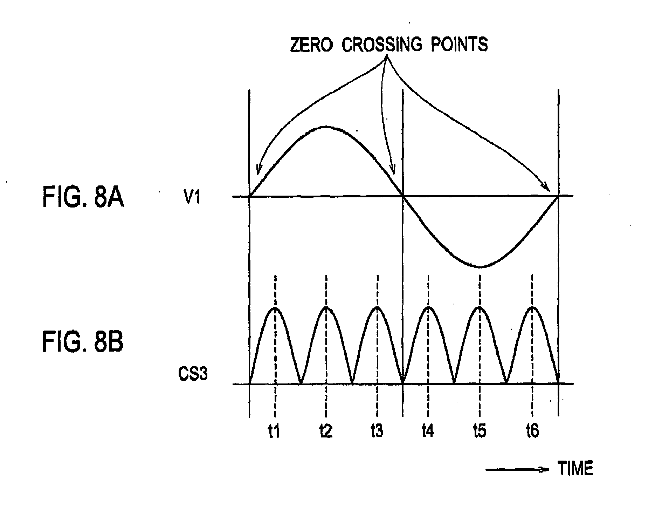

FIGs. 8A and 8B are waveform charts for explaining the operation of the power supply apparatus 1C.

The synchronization signal generator circuit 201 detects zero crossing points of the phase voltage V1 shown in FIG. 8A. In other words, the synchronization signal generator circuit 201 outputs the synchronization signal SYN at the timing when the phase voltage V1 becomes zero.

The correction signal generator circuit 202A generates the correction signal CS3 shown in FIG. 8A. In the second embodiment, the waveform of the correction signal CS3 is a half-sine wave. Timings t1 to t6 at which the correction signal CS3 reaches its peak value are in synchronization with the timings P1 to P5 at which the rectified voltage VPQ falls (see FIG. 3A).

The correction signal CS3 is added to the error signal ES outputted by the error amplifier 155. Thus, as the voltage of the correction signal CS3 shown in FIG. 8A increases, the duty ratio of the switching control signal G1 increases. In other words, the on-duty of the switching element Tr1 increases around the timings P1 to P5 at which the rectified voltage VPQ falls.

### (3) The functions and advantageous effects

According to the second embodiment, the control circuit 15C generates the correction signal CS whose frequency component is six times higher than the frequency component of the phase voltage V1, in synchronization with the phase voltage V1. Further, the control circuit 15C increases the on-duty of the switching element Tr1 around the timings P1 to P5 at which the rectified voltage VPQ falls, by using the correction signal CS.

Therefore, the control circuit 15C can achieve a control for correcting distortions of the phase currents Iu1 to Iu3 from outside the main circuit 2A. Thereby it is possible to suppress increases in the size and cost of the power supply apparatus 1C.

According to the second embodiment, further, the control circuit 15C is configurable with an inexpensive microcomputer because complicated controls are not required. Also, it is possible to change a control method with relative ease.

### (4) The modified example

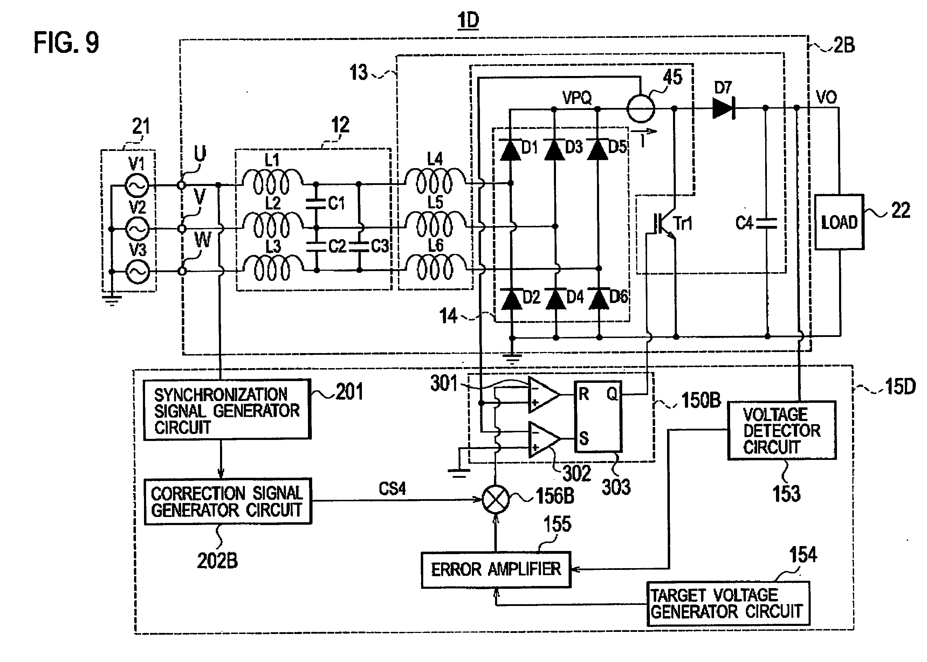

Description will be given of a configuration having the current critical mode function, as the modified example of the power supply apparatus 1C mentioned above. FIG. 9 is a circuit block diagram of a power supply apparatus 1D according to the modified example. Incidentally, as for the same configurations as those shown in FIG. 6, repeated description thereof will be omitted.

The multiplier 156B multiples the output signal ES from the error amplifier 155 by an output signal (a correction signal CS4) from a correction signal generator circuit 202B. Also, the switching control circuit 150B performs control so as to permit the on-off operation of the switching element Tr1 after the current I passing through the output of the diode rectifier circuit 14 has become zero.

According to the modified example, the switching element Tr1 is allowed to perform the on-off operation after the current passing through the output of the diode rectifier circuit 14 (that is, the currents through the alternating current reactors L4 to L6) has become zero. Thereby, it is possible to further improve the waveforms of the phase currents Iu1 to Iu3.

### (Other embodiments)

While the present invention has been described above in terms of the embodiments, it is to be understood that the teachings and drawings that form part of the present disclosure are not intended to limit the scope of the invention. From this disclosure, various alternative embodiments, examples and applicable technologies will be apparent to those skilled in the art.

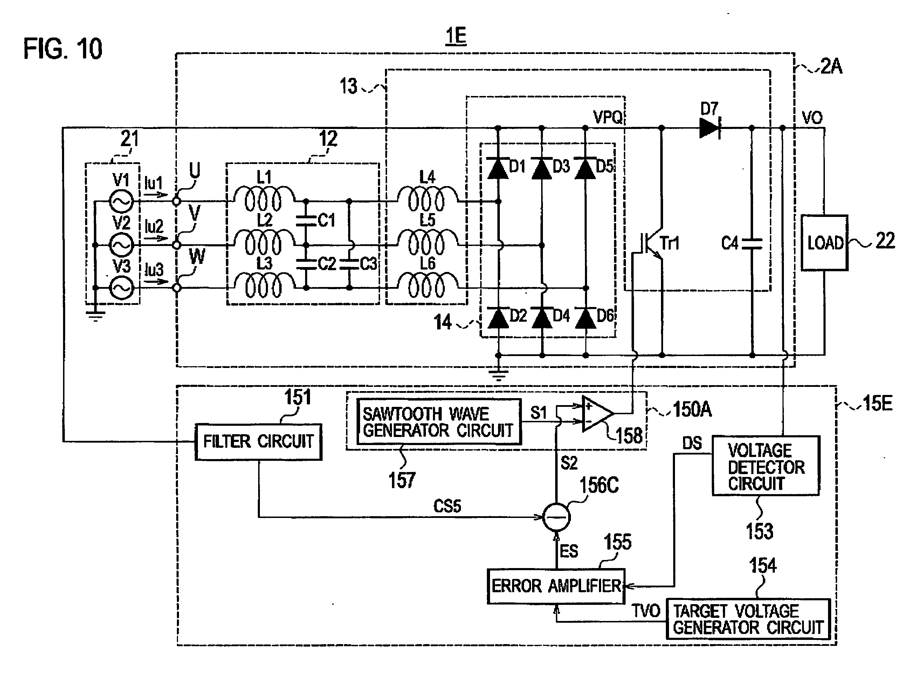

Also, in the above-mentioned first embodiment, there has been described the control circuit 15A including the adder 156A; however, a subtracter 156C may be used in place of the adder, as shown in FIG. 10. In this instance, the phase inverter circuit 152 may be omitted. The subtracter 156C subtracts the output signal (a correction signal CS5) from the filter circuit 151, from the error signal ES from the error amplifier 155.

Further, in each of the above-mentioned embodiments, there has been described the configuration in which addition, multiplication or subtraction of any one of the correction signals CS1 to CS5 is performed in the output of the error amplifier 155; however, a configuration may be adopted in which the addition, multiplication or subtraction of any one of the correction signals CS1 to CS5 is performed between the target voltage generator circuit 154 and the error amplifier 155, instead of being performed in the output of the error amplifier 155.

Incidentally, in the above-mentioned embodiments, the IGBT is used as the switching element Tr1; however, the switching element Tr1 is not limited to the IGBT, and other transistors such as a field effect transistor (FET) may be used.

Thus, it is to be understood that the present invention may cover various embodiments and the like as not disclosed herein. The scope of the invention is therefore to be determined solely by the appended claims, as interpreted by the description and drawings.

## Claims

1. A power supply apparatus comprising:
a main circuit configured to receive an input of an alternating current voltage from a three-phase alternating current power supply, to convert the alternating current voltage into a direct current voltage, and to apply the direct current voltage to a load; and
a control circuit configured to detect the direct current voltage and to control the main circuit in accordance with the detected direct current voltage, wherein
the main circuit is configured to comprise:
a diode rectifier circuit configured to rectify the alternating current voltage to thereby output a rectified voltage; and
a boost circuit configured to include a switching element connected to an output of the diode rectifier circuit, to boost the rectified voltage by getting the switching element to perform an on-off operation at a predetermined switching cycle, and thereby to output the direct current voltage, and
the control circuit is configured to increase a ratio of an on-period of the switching element to the predetermined switching cycle in a period corresponding to a falling portion of a waveform of the rectified voltage.

2. The power supply apparatus according to claim 1, wherein
the control circuit is configured to extract a ripple component of the rectified voltage, and to increase the ratio of the on-period by using the extracted ripple component.

3. The power supply apparatus according to claim 2, wherein
the control circuit is configured to comprise:
an error amplifier configured to output an error signal depending on a difference between the direct current voltage and a target value of the direct current voltage;
a filter circuit configured to extract the ripple component;
a phase inverter circuit configured to invert a phase of the ripple component;
a superimposing circuit configured to superimpose an output signal from the phase inverter circuit on the error signal outputted by the error amplifier; and
a switching control circuit configured to control the on-off operation of the switching element in accordance with an output signal from the superimposing circuit.

4. The power supply apparatus according to claim 2, wherein
the control circuit is configured to comprise:
an error amplifier configured to output an error signal depending on a difference between the direct current voltage and a target value of the direct current voltage;
a filter circuit configured to extract the ripple component;
a subtracter configured to subtract an output signal from the filter circuit, from the error signal outputted by the error amplifier; and
a switching control circuit configured to control the on-off operation of the switching element in accordance with an output signal from the subtracter.

5. The power supply apparatus according to claim 1, wherein
the control circuit is configured to generate a correction signal whose frequency component is six times higher than a frequency component of the alternating current voltage, in synchronization with the alternating current voltage, and to increase the ratio of the on-period by using the generated correction signal.

6. The power supply apparatus according to claim 5, wherein
the control circuit is configured to comprise:
an error amplifier configured to output an error signal depending on a difference between the direct current voltage and a target value of the direct current voltage;
a synchronization signal generator circuit configured to detect a timing at which the alternating current voltage becomes zero, and to generate a synchronization signal in synchronization with the detected timing;
a correction signal generator circuit configured to generate the correction signal, by using the synchronization signal as a reference;
a superimposing circuit configured to superimpose the correction signal on the error signal outputted by the error amplifier; and
a switching control circuit configured to control the on-off operation of the switching element in accordance with an output signal from the superimposing circuit.
